(19) Europäisches Patentamt

European Patent Office

Office européen des brevets

(11) **EP 1 689 109 A1**

(12) **EUROPEAN PATENT APPLICATION**

(43) Date of publication:
**09.08.2006 Bulletin 2006/32**

(51) Int Cl.:
*H04L 1/06* (2006.01)          *H04B 7/06* (2006.01)
*H01Q 3/26* (2006.01)

(21) Application number: **06002247.2**

(22) Date of filing: **03.02.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **04.02.2005 KR 2005010567**

(71) Applicants:
• **Samsung Electronics Co., Ltd.**
  **Suwon-si, Gyeonggi-Do (KR)**
• **Yonsei University**
  **Seoul (KR)**

(72) Inventors:
• **Kwun, Jong-Hyung**
  **c/oSamsung Electronics Co., Ltd.**
  **Suwon-si**
  **Gyeonggi-do (KR)**

• **Kim, Eung-Sun**
  **c/oSamsung Electronics Co., Ltd.**
  **Suwon-si**
  **Gyeonggi-do (KR)**
• **Lee, Jong-Hyeuk**
  **c/oSamsung Electronics Co., Ltd.**
  **Suwon-si**
  **Gyeonggi-do (KR)**
• **Hong, Dae-Sik**
  **c/oSamsung Electronics Co., Ltd.**
  **Suwon-si**
  **Gyeonggi-do (KR)**
• **Ko, Eun-Seok**
  **c/oSamsung Electronics Co., Ltd.**
  **Suwon-si**
  **Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(54) **Transmission method and device for MIMO system**

(57)     A signal transmission method for a multiple input multiple output (MIMO) communication system. A transmitter having a plurality of transmission antennas receives antenna selection information from a receiver having at least one reception antenna. The transmitter selects at least two transmission antennas based on the antenna selection information, beamforms space-time block coding (STBC)-coded input signals with a weighting matrix, and transmits the beamformed signals via the selected transmission antennas. The antenna selection information is generated based on exact channel characteristics and statistical channel characteristics for the transmission antennas and a spatial correlation between the transmission antennas.

$$\left[h_m^{\overset{max}{}} h_n\right]\left|h_m^{'}\right|^2 + \left|h_n^{'}\right|^2 = \left[h_m^{\overset{max}{}} h_n\right]\left|h_m^{'}\right|^2 + \left|h_n^{'}\right|^2 + 4\frac{N_0}{gE_s}\frac{|\rho|}{|\rho|^2}(h_m h_n^{*} + h_m^{*} h_n)$$

FIG.3

EP 1 689 109 A1

**Description**

The present invention relates generally to a wireless communication system, and in particular, to a Multiple Input Multiple Output (MIMO) transmission method based on both an antenna selection technique and a two-dimensional beamforming technique for a MIMO system. The present invention also relates to a signal transmission device for use in a MIMO system.

In a MIMO communication system that transmits/receives data using a plurality of transmission antennas and a plurality reception antennas, a MIMO channel formed by the transmission and reception antennas is disassembled into a plurality of independent spatial channels. Compared with the conventional single-antenna system, a multi-antenna system is recently attracting public attention due to its expected high data rate and improved system performance. However, in order to use a MIMO technique, certain presumptions for the MIMO channels and for the transmission and reception antennas are required. For these presumptions, it is assumed that the MIMO channels are used in a rich scattering environment in which there are a high level of scatterings and reflections, and it is assumed that there is no correlation between the transmission and reception antennas. Because the MIMO channels are used in the rich scattering environments, it can be assumed that MIMO channels formed between different antennas are fading channels which are independent of each other. However, in an actual MIMO channel environment, because a correlation exists between the antennas, it cannot be assumed that there are no independent channels. Therefore, the MIMO technique suffers performance degradation in an actual channel environment in which there is a spatial correlation.

In order to improve the performance of a MIMO system in a channel having a spatial correlation, a transmitter can apply a water filling technique using perfect channel information. However, in an actual system, it is almost impossible for the transmitter to acquire time-varying (or exact) channel information. Due to the restriction on the use of the channel information at the transmitter, MIMO techniques for overcoming the spatial correlation problem with only partial channel information have been proposed. One of these MIMO techniques is a two-dimensional beamforming technique, and this technique combines a Space-Time Coding (STC) technique and a Beamforming technique that uses only statistical channel information, i.e., a channel correlation matrix, other than the time-varying channel information.

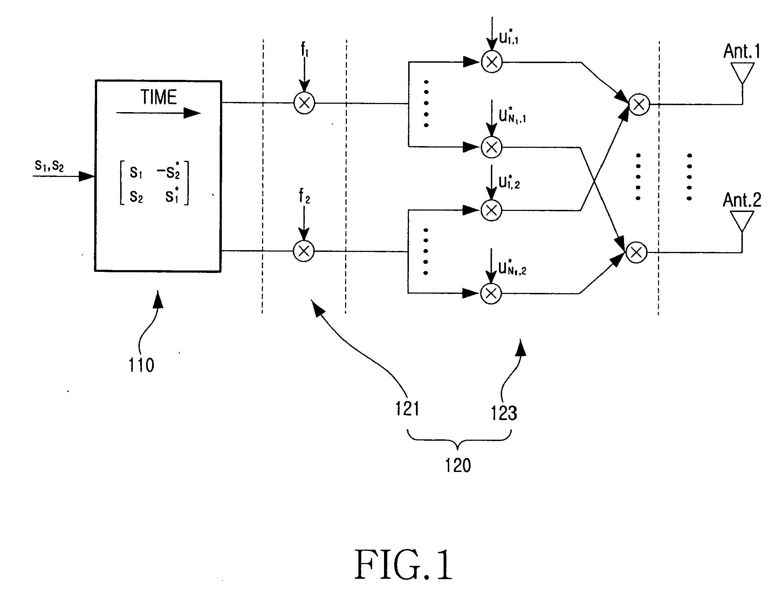

FIG. 1 is a diagram illustrating a structure of a transmitter, given for a description of the conventional two-dimensional beamforming technique. The transmitter includes a Space-Time Block Coding (STBC) block 110 and an eigen-beamforming block 120. The eigen-beamforming block 120 includes a power loading part 121 and an antenna weighting part 123. The two-dimensional beamforming technique, since it uses STBC codes, can perform simple decoding and obtain spatial diversity gain with only one reception antenna. In addition, compared with the STBC technique in which an increase in the number of transmission antennas decreases the data rate, the two-dimensional beamforming technique maintains a data rate even though the number of transmission antennas increases. A two-dimensional beamforming technique with $N_t$ transmission antennas can be simply expressed as Equation (1):

$$Z_{2-d} = \left[ Z_{c,2\times2}, 0_{2\times(N_T-2)} \right] D_f U_h^H \qquad \ldots\ldots\ldots (1)$$

where $^H$ denotes Hermitian of a matrix, and $Z_{c,2\times2}$ denotes an Alamouti code, which is well known as an STBC code satisfying a data rate of 1. The Alamouti code is represented by a matrix of Equation (2) below. In addition, $0_{2\times(NT-2)}$ denotes a $2\times(N_T-2)$ zero matrix, $D_f$ denotes an $N_T\times N_T$ diagonal matrix on which power loading is performed, and $U_h^H$ denotes an $N_T\times N_T$ eigen vector matrix obtained through eigen decomposition on a channel correlation matrix. The $D_f$ and $U_h^H$ correspond to beamforming in the two-dimensional beamforming technique.

$$Z_{c,2\times2} = \begin{bmatrix} s_1 & s_2 \\ -s_2^* & s_1^* \end{bmatrix} \qquad \ldots\ldots\ldots (2)$$

Beamforming is achieved by using only the correlation matrix information of a channel, and this process is designed to minimize a symbol error rate (SER). The beamforming designed in terms of a minimum SER is divided into the power loading part and the antenna weighting part as described above. The $U_h^H$ for antenna weighting can obtain a channel correlation matrix $R_{hh}$ through eigen decomposition as shown in Equation (3).

$$R_{hh} = U_h D_h U_h^H$$
$$D_h = diag(\lambda_1, \cdots, \lambda_{N_T}) \qquad \cdots\cdots\cdots (3)$$

where $U_h$ denotes a unit matrix, and $\lambda_i$ denotes an $i^{th}$ eigen value of $R_{hh}$, and satisfies $\lambda_i \gtrsim 0$. A component $f_i$ of the $D_f$ on which power loading is performed is calculated by Equation (4) below.

$$f_i = \sqrt{\left[\frac{1}{2} + \frac{N_0}{2gE_s}\left(\sum_{l=1}^{2}\frac{1}{\lambda_l} - \frac{1}{\lambda_i}\right)\right]_+}, \quad i = 1,2 \qquad \cdots\cdots\cdots (4)$$

where $[x]_+ = max(x,0)$, $N_0$ denotes noise power, $E_s$ denotes signal power, and g denotes a constant term determined according to each modulation scheme and is 0.1 for M-ary Quadrature Amplitude Modulation (M-QAM). Because two-dimensional beamforming is performed, power loading components $f_3$ and $f_4$ for $i$=3 and 4 become 0 ($f_3$=$f_4$=0).

However, in an environment with a low spatial correlation or a high signal-to-noise ratio (SNR) for a channel, the two-dimensional beamforming technique cannot fully utilize as many channels as the number of antennas in use.

Another technique of using partial channel information is a transmission antenna selection technique. The transmission antenna selection technique selects transmission antennas according to channel conditions, thereby obtaining diversity gain.

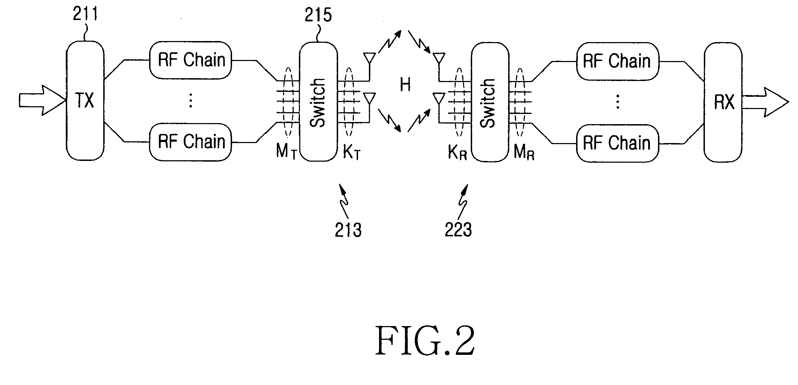

FIG. 2 is a diagram of the conventional transmission antenna selection technique using STBC codes. The transmission antenna selection technique, a technique for selecting some of a plurality of transmission antennas 213 and reception antennas 223, STBC-encodes a transmission signal at a transmission signal processing block 211, similar to the two-dimensional beamforming technique. When transmission antennas are selected, signal streams output in parallel from the transmission signal processing block 211 are routed to their associated transmission antennas through a switch 215. The number of selected antennas depends upon which STBC code is used. If the Alamouti code used in the two-dimensional beamforming is used, a transmitter must select two antennas. The transmission antenna selection technique is classified into two techniques according to antenna selection methods: one technique selects transmission antennas based on the exact channel information and another technique selects transmission antennas using only statistical channel information. The former is based on Exact Channel Knowledge (ECK) information and the latter is based on Statistical Channel Knowledge (SCK) information.

First, the ECK-based transmission antenna selection technique will be described. When STBC codes are used, a received signal-to-noise ration (SNR) can be obtained by Equation (5).

$$\gamma = \frac{E_s}{N_T N_O}\|H\|_F^2 \qquad \cdots\cdots\cdots (5)$$

where H denotes a channel matrix of a MIMO system, and $\|\cdot\|_F$ denotes a Frobenious norm. The system performance is proportional to the received SNR. In other words, an increase in the received SNR increases the system performance. If it is assumed in Equation (5) that the signal power and the noise power are both fixed, the received SNR is determined based only on $\|H\|_F^2$. Therefore, the ECK-based transmission antenna selection technique simply selects an antenna set with the maximum $\|H\|_F^2$. This is the equivalent to selecting a channel having the highest power from among the channels formed by individual transmission antennas.

Next, the SCK-based transmission antenna selection technique will be described. The SCK technique has been proposed based on statistical channel characteristics. Assuming that the transmitter has knowledge of a channel correlation matrix, performance of a MIMO system having $N_T$ transmission antennas and $N_R$ reception antennas is determined by Equation (6) below.

$$P_e(S^{(i)} \rightarrow S^{(j)}) \leq \frac{\gamma - (N_T N_R)}{\det(R_R)^{N_T} \det(R_T)^{N_R} \det(E_{i,j} E_{i,j}{}^H)^{N_R}} \qquad \cdots \cdots \cdots (6)$$

where $S^{(i)}$ denotes a transmitted codeword, $S^{(j)}$ denotes a random codeword other than the transmitted codeword, and $P_e(S^{(i)} \rightarrow S^{(j)})$ denotes a pairwise error probability. In addition, $E_{ij}$ denotes an error matrix defined as $E_{ij} = S^{(i)} - S^{(j)}$ $R_T$ and $R_R$ denote a channel correlation matrix for transmission antennas and a channel correlation matrix for reception antennas, respectively, and det(.) denotes a channel determinant.

From the pairwise error probability, it is noted that det($R_T$) and det($R_R$) must be maximized in order to increase performance of the MIMO system. Herein, because only the selection of transmission antennas is taken into account, the description will be limited to a method of maximizing det($R_T$). As a result, the transmission antenna selection can maximize system performance with only the statistical channel characteristics, and an antenna set that maximizes det ($R_T$) must be determined. Therefore, the SCK-based transmission antenna selection technique selects an antenna set having the maximum det($R_T$). In the transmission antenna selection technique, the transmitter requires only antenna selection information rather than the full channel information. However, this transmission antenna selection technique cannot avoid performance degradation caused by spatial correlation, because it was designed without taking into consideration the spatial correlation.

The present invention is provided to substantially solve at least the above problems and/or disadvantages.

It is, therefore, the object of the present invention to provide a Multiple Input Multiple Output (MIMO) transmission method for improving antenna selection gain by selecting antennas using both Exact Channel Knowledge (ECK) information and Statistical Channel Knowledge (SCK) information.

This object is solved by the subject matter of the independent claims.

Preferred embodiments are defined in the dependent claims.

It is an aspect of the present invention to provide a MIMO transmission method for preventing performance degradation caused by spatial correlation and improving system performance by selecting transmission antennas depending on not only ECK information but also SCK information.

It is another aspect of the present invention to provide a MIMO transmission method and a corresponding device for improving system performance through effective utilization of MIMO channels taking spatial correlation into account.

According to one aspect of the present invention, there is provided a signal transmission method for a multiple input multiple output (MIMO) communication system. A transmitter having a plurality of transmission antennas receives antenna selection information from a receiver having at least one reception antenna. The transmitter selects at least two transmission antennas based on the antenna selection information, beamforms space-time block coding (STBC)-coded input signals with a weighting matrix, and transmits the beamformed signals via the selected transmission antennas.

The above and other objects, features and advantages of the present invention will become more apparent from the following detailed description when taken in conjunction with the accompanying drawings in which:

FIG. 1 is a diagram illustrating a structure of a transmitter, given for a description of a conventional two-dimensional beamforming technique;

FIG. 2 is a diagram of a conventional transmission antenna selection technique using STBC codes;

FIG. 3 is a diagram illustrating a structure of a Multiple Input Multiple Output (MIMO) transmitter according to an embodiment of the present invention;

FIG. 4 is a graph illustrating comparative simulation results between a novel transmission method and conventional transmission methods in terms of robustness against spatial correlation;

FIG 5 is a graph illustrating comparative simulation results between a novel transmission method and a conventional two-dimensional beamforming technique-based transmission method in terms of a symbol error rate (SER) with respect to a signal-to-noise ratio (SNR); and

FIG. 6 is a graph illustrating comparative simulation results between a novel transmission method and a conventional antenna selection technique-based transmission method in terms of an SER with respect to an SNR.

A Multiple Input Multiple Output (MIMO) transmission method according to an exemplary embodiment of the present invention will now be described with reference to the accompanying drawings.

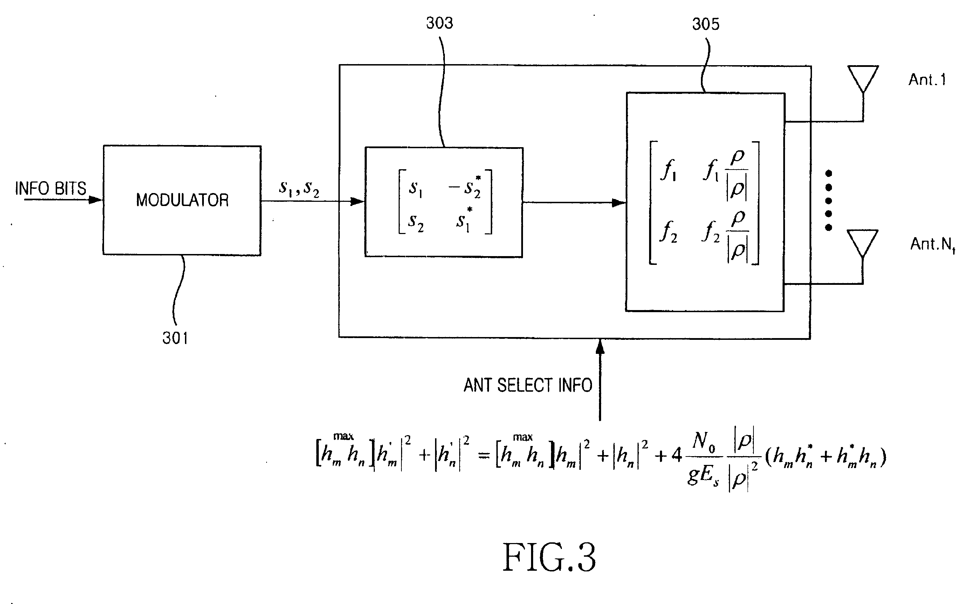

FIG. 3 is a diagram illustrating a structure of a MIMO transmitter according to an embodiment of the present invention. In FIG. 3, a MIMO transmitter according to an embodiment of the present invention includes a modulator 301 for generating symbols by modulating input information bits according to a modulation mode, a Space-Time Block Coding (STBC) encoder 303 for STBC-encoding the symbols output from the modulator 301, and a two-dimensional beamformer 305 for selecting two antennas from among a plurality of transmission antennas according to antenna channel information being fed back from a receiver and performing two-dimensional beamforming on the selected antennas.

For convenience, it will be assumed herein that a transmitter transmits signals via two transmission antennas and a receiver receives signals via one reception antenna.

Selection of the antennas is achieved using channel information fed back from the receiver. The MIMO transmitter selects an $m^{th}$ antenna and an $n^{th}$ antenna depending on the channel information, and finds a channel correlation matrix corresponding to the two selected antennas using Equation (7) below.

$$R_{hh}^{sel} = E\left[\begin{bmatrix} h_m \\ h_n \end{bmatrix} \begin{bmatrix} h_m^* h_n^* \end{bmatrix}\right] = \begin{bmatrix} 1 & \rho \\ \rho^* & 1 \end{bmatrix} \quad \dots \dots \dots (7)$$

where p denotes an inter-channel spatial correlation corresponding to the two selected antennas. Through eigen decomposition of Equation (7), an eigenvalue matrix A of Equation (8) and an eigenvector matrix $U_{hh}^{sel}$ of Equation (9) can be found.

$$\Lambda = \begin{bmatrix} 1+|\rho| & 0 \\ 0 & 1-|\rho| \end{bmatrix} \quad \dots \dots \dots (8)$$

$$U_{hh}^{sel} = \frac{1}{\sqrt{2}} \begin{bmatrix} 1 & 1 \\ \dfrac{\rho^*}{|\rho|} & -\dfrac{\rho^*}{|\rho|} \end{bmatrix} \quad \dots \dots \dots (9)$$

From Equation (8) and Equation (9), a weighting matrix T for two-dimensional beamforming, shown in Equation (10), can be found.

$$T = \begin{bmatrix} f_1 & f_1 \dfrac{\rho}{|\rho|} \\ f_2 & f_2 \dfrac{\rho}{|\rho|} \end{bmatrix} \quad \dots \dots \dots (10)$$

where

$$f_1 = \frac{1}{2}\sqrt{1 + \frac{N_0}{gE_s} \frac{2|\rho|}{1-|\rho|^2}} \quad \text{and} \quad f_2 = \frac{1}{2}\sqrt{1 - \frac{N_0}{gE_s} \frac{2|\rho|}{1-|\rho|^2}}.$$

A signal transmitted through two-dimensional beamforming using the transmission matrix is received at the receiver, and the received signal can be expressed as Equation (11). The received signal refers to a signal input to an STBC decoder.

$$\begin{bmatrix} r_1 \\ r_2 \end{bmatrix} = \begin{bmatrix} s_1 & s_2 \\ -s_2^* & s_1^* \end{bmatrix} \begin{bmatrix} h_m' \\ h_n' \end{bmatrix} + \begin{bmatrix} w_1 \\ w_2 \end{bmatrix} \qquad \ldots\ldots\ldots (11)$$

where $w$, and $w_2$ denote Gaussian noises, and $h_m'$ and $h_n'$ denote equivalent channels including the two-dimensional beamforming effect and can be expressed as Equation (12).

$$\begin{bmatrix} h_m' \\ h_n' \end{bmatrix} = \begin{bmatrix} f_1 h_1 + f_1 \dfrac{\rho}{|\rho|} h_n \\ f_2 h_1 - f_2 \dfrac{\rho}{|\rho|} h_n \end{bmatrix} \qquad \ldots\ldots\ldots (12)$$

A signal-to-noise ratio (SNR) of a signal obtained by decoding the received signal of Equation (11) with the STBC decoder is given by Equation (13).

$$\gamma = \frac{E_s}{2N_0}\left( \left| h_m' \right|^2 + \left| h_n' \right|^2 \right) \qquad \ldots\ldots\ldots (13)$$

As is well known to those skilled in the art, because system performance is proportional to an SNR of a received signal, the SNR expressed as Equation (13) must be maximized in order to increase two-dimensional beamforming performance. Therefore, when power of a transmission signal and power of noises are given, the SNR of Equation (13) is maximized when $\left| h_m' \right|^2 + \left| h_n' \right|^2$ is maximized. Selection of the transmission antennas is achieved through Equation (14) below.

$$\begin{bmatrix} \overset{max}{h_m h_n} \end{bmatrix} \left| h_m' \right|^2 + \left| h_n' \right|^2 = \begin{bmatrix} \overset{max}{h_m h_n} \end{bmatrix} \left| h_m \right|^2 + \left| h_n \right|^2 + 4\frac{N_0}{gE_s}\frac{|\rho|}{1-|\rho|^2}\left( h_m h_n^* + h_m^* h_n \right) \qquad \ldots\ldots (14)$$

The SNR can be maximized by selecting $m^{th}$ and $n^{th}$ antennas that satisfy Equation (14).

With reference to accompanying drawings, a description will now be made of performance simulation results for the MIMO transmission method according to an embodiment of the present invention.

The simulation was performed in such a manner that two transmission antennas are selected in a system that has a total of four transmission antennas and one reception antenna, and uses 16QAM. In the simulation, a Rayleigh fading channel was used as a channel model, and a Paulraj model and an HSDPA MIMO channel were used as spatial correlation channels. The conventional systems to be compared with a novel system according to an embodiment of the present invention include two-dimensional beamforming, ECK antenna selection, SCK antenna selection, and quasi-STBC systems.

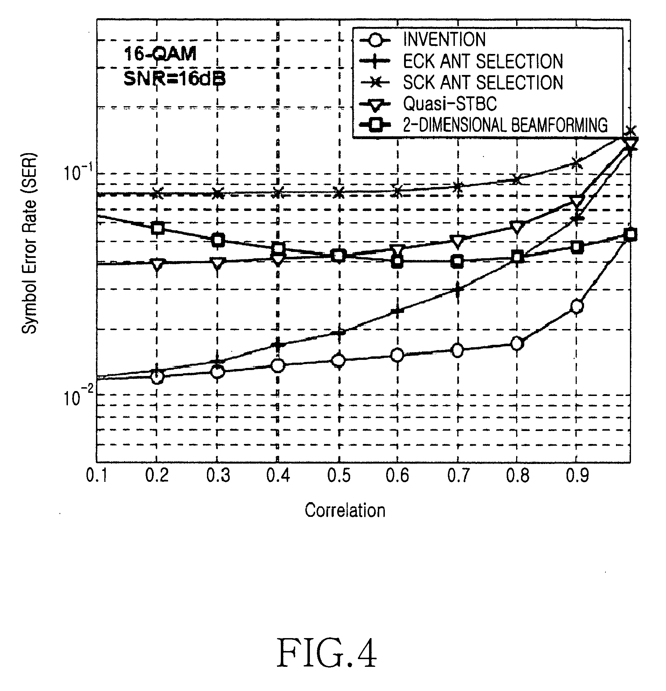

FIG 4 is a graph illustrating comparative simulation results between the novel transmission method and the conventional transmission methods in terms of robustness against spatial correlation.

It can be noted from FIG. 4 that the novel transmission scheme has a lower SER than the conventional transmission schemes based on the two-dimensional beamforming technique and the antenna selection techniques in terms of a symbol error rate (SER) with respect to spatial correlation over the full range. The performance difference is noticeable, especially in a low-spatial correlation region.

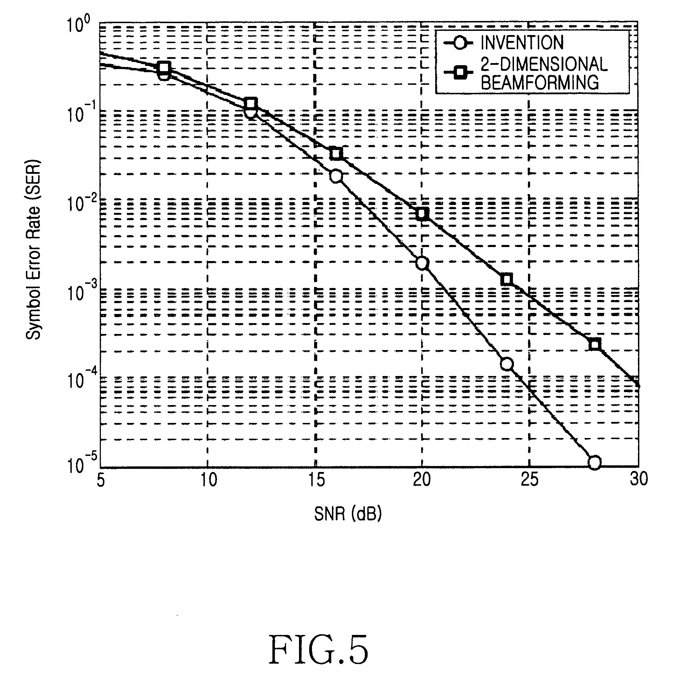

FIG. 5 is a graph illustrating comparative simulation results between the novel transmission method and the conventional two-dimensional beamforming technique-based transmission method in terms of an SER with respect to an SNR.

For the simulation, an angle spread -60° model was used among HSDPA spatial correlation channel models. As illustrated in FIG. 5, compared with the conventional two-dimensional beamforming technique-based transmission scheme, the novel transmission scheme shows an SNR gain of a maximum of 5dB at a symbol error rate of $10^{-4}$. It can be noted that the performance difference becomes greater at a higher SNR. This is because the transmission schemes are greatly affected by diversity gain rather than beamforming gain in a high-SNR region. The conventional two-dimensional beamforming technique-based transmission scheme obtains diversity gain simply by STBC coding, whereas the novel transmission scheme can obtain selection diversity gain as well as the two-dimensional beamforming gain. Therefore, the performance gain difference becomes greater at a higher SNR.

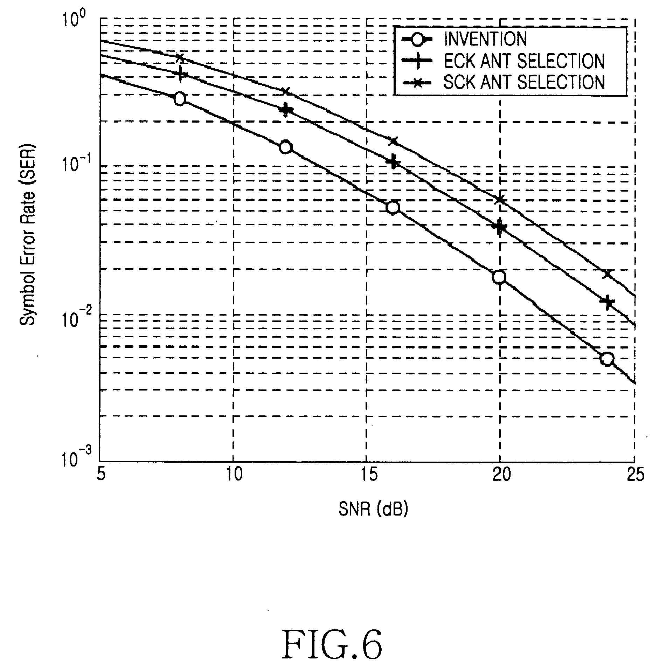

FIG. 6 is a graph illustrating comparative simulation results between the novel transmission method and the conventional antenna selection technique-based transmission method in terms of an SER with respect to an SNR. In this simulation, an angle spread-5° model was used among HSDPA spatial correlation channel models. As illustrated in FIG. 6, compared with the conventional antenna selection technique-based transmission method, the novel transmission method has an SNR gain of a maximum of 4dB at an SER of $10^{-2}$, and it remains over the full SNR range. It can be noted that the novel transmission method has a higher SNR gain, as compared with the conventional transmission schemes based on, especially the SCK technique among the antenna selection techniques. This is because the novel transmission method selects channels based on the statistical channel characteristics (i.e., SCK information) and the ECK information. In addition, the novel transmission method, as it obtains beamforming gain using two-dimensional beamforming that can overcome the spatial correlation, is superior in performance than the conventional antenna selection technique-based transmission method that does not take the spatial correlation into consideration.

As can be understood from the foregoing description, unlike the conventional antenna selection technique-based transmission method, the novel MIMO transmission method takes into account both the ECK characteristics and the SCK characteristics. Therefore, the novel MIMO transmission method, which takes into account the spatial correlation that is not considered in the conventional antenna selection technique, exhibits superior performance in an actual channel environment having the spatial correlation.

In addition, the novel MIMO transmission method, optimized for the two-dimensional beamforming technique, can improve its performance by increasing the utility of the two-dimensional beamforming.

Moreover, an increase in the number of transmission antennas in use causes an increase in the required number of radio frequency (RF) devices. The increase in the number of the high-priced RF devices increases the production cost. However, because the novel transmission method uses only two antennas during transmission even though there are many transmission antennas provided, it does not require as many RF devices as the total number of the antennas. The novel transmission method can reduce the number of RF devices by simply switching the RF device to the selected antennas.

While the invention has been shown and described with reference to a certain preferred embodiment thereof, it will be understood by those skilled in the art that various changes in form and details may be made therein without departing from the scope of the invention as defined by the appended claims.

## Claims

1. A signal transmission method for a multiple input multiple output, MIMO, communication system including a transmitter having a plurality of transmission antennas and a receiver having at least one reception antenna, the method comprising the steps of:

   receiving antenna selection information from the receiver;
   selecting at least two transmission antennas based on the antenna selection information; and
   beamforming space-time block coding, STBC, -coded input signals with a weighting matrix, and transmitting the beamformed signals via the selected transmission antennas.

2. The signal transmission method of claim 1, wherein the antenna selection information is generated based on exact channel characteristics and statistical channel characteristics for the transmission antennas.

3. The signal transmission method of claim 1, wherein the antenna selection information is generated based on a spatial correlation between the transmission antennas.

4. The signal transmission method of claim 1, wherein the antenna selection information is generated based on exact channel characteristics and statistical channel characteristics for the transmission antennas, and a spatial correlation between the transmission antennas.

5. The signal transmission method of one of claims 1 to 4, wherein the antenna selection information is calculated by the following equation:

$$\left[\overset{max}{h_m h_n}\right]\left|h_m'\right|^2 + \left|h_n'\right|^2 = \left[\overset{max}{h_m h_n}\right]\left|h_m\right|^2 + \left|h_n\right|^2 + 4\frac{N_0}{gE_s}\frac{|\rho|}{1-|\rho|^2}\left(h_m h_n^* + h_m^* h_n\right)$$

where $h_m'$ and $h_n'$ denote equivalent channels to m$^{th}$ and n$^{th}$ channels $h_m$ and $h_n$ including a two-dimensional beamforming effect, $N_0$ denotes noise power of a received signal, $E_s$ denotes signal power of the received signal, g denotes a constant determined according to a modulation scheme in use, and p denotes an inter-channel spatial correlation for the selected antennas.

6. The signal transmission method of claim 5, wherein the weighting matrix is expressed as $T = \begin{bmatrix} f_1 & f_1\dfrac{\rho}{|\rho|} \\ f_2 & f_2\dfrac{\rho}{|\rho|} \end{bmatrix}$,

where $f_i$ denotes power allocated to an $i^{th}$ channel.

7. A signal transmission device for use in a multiple input multiple output, MIMO, communication system including a transmitter having a plurality of transmission antennas and a receiver having at least one reception antenna, wherein said device comprises:

   a receiver for receiving antenna selection information;
   means for selecting at least two transmission antennas based on the antenna selection information;
   means for beamforming space-time block coding, STBC, -coded input signals with a weighting matrix, and
   a transmitter for transmitting the beamformed signals via the selected transmission antennas.

8. The signal transmission device of claim 7 adapted to be operated according to one of claims 1 to 6.

FIG.1

FIG.2

INFO BITS → MODULATOR → $s_1, s_2$ → $\begin{bmatrix} s_1 & -s_2^* \\ s_2 & s_1^* \end{bmatrix}$ → $\begin{bmatrix} f_1 & f_1 \dfrac{\rho}{|\rho|} \\ f_2 & f_2 \dfrac{\rho}{|\rho|} \end{bmatrix}$ → Ant.1 ... Ant.$N_t$

301

ANT SELECT INFO

$$\left[ h_m^{\,max}\, h_n \right] h_m^{'} \Big|^2 + \left| h_n^{'} \right|^2 = \left[ h_m^{\,max}\, h_n \right] h_m \Big|^2 + \left| h_n \right|^2 + 4 \frac{N_0}{g E_s} \frac{|\rho|}{|\rho|^2} (h_m h_n^* + h_m^* h_n)$$

FIG.3

EP 1 689 109 A1

FIG.4

FIG.5

FIG.6

European Patent
Office

**EUROPEAN SEARCH REPORT**

Application Number

EP 06 00 2247

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HONGJI XU ET AL: "Joint beamforming and transmit diversity for wireless communications" COMMUNICATIONS, CIRCUITS AND SYSTEMS, 2004. ICCCAS 2004. 2004 INTERNATIONAL CONFERENCE ON CHENGDU, CHINA 27-29 JUNE 2004, PISCATAWAY, NJ, USA,IEEE, US, 27 June 2004 (2004-06-27), pages 195-199Vol1, XP010731975 ISBN: 0-7803-8647-7 | 1,7,8 | H04L1/06 H04B7/06 H01Q3/26 |
| Y | * abstract; figure 1 * * page 196, left-hand column, line 2 - page 197, paragraph 1 * ----- | 2-6 | |
| Y | YA-HAN PAN ET AL: "Adaptive beamforming with antenna selection in MIMO systems" VEHICULAR TECHNOLOGY CONFERENCE, 2004. VTC2004-FALL. 2004 IEEE 60TH LOS ANGELES, CA, USA 26-29 SEPT. 2004, PISCATAWAY, NJ, USA,IEEE, 26 September 2004 (2004-09-26), pages 1570-1574, XP010786899 ISBN: 0-7803-8521-7 * page 1751, right-hand column, paragraph 2 - page 1752, paragraph 3 * ----- | 2-6 | |
| Y | CHRIS GAO ET AL: "Two dimensional beamforming: an optimal solution for joint multiple array transmit and receive problem" SIGNALS, SYSTEMS, AND COMPUTERS, 1999. CONFERENCE RECORD OF THE THIRTY-THIRD ASILOMAR CONFERENCE ON OCT. 24-27, 1999, PISCATAWAY, NJ, USA,IEEE, US, vol. 1, 24 October 1999 (1999-10-24), pages 501-505, XP010374031 ISBN: 0-7803-5700-0 * sections 3 and 4 * ----- | 2-6 | TECHNICAL FIELDS SEARCHED (IPC) H04L H04B H01Q |
| | -/-- | | |

The present search report has been drawn up for all claims

| Place of search | Date of completion of the search | Examiner |
|---|---|---|
| Munich | 27 March 2006 | Agudo Cortada, E |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**European Patent Office**

**EUROPEAN SEARCH REPORT**

Application Number

EP 06 00 2247

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | D. A. GORE ET AL: "MIMO antenna subset selection with space-time coding" IEEE TRANS. SIGNAL PROCESS., vol. 50, no. 10, August 2002 (2002-08), pages 2580-2588, XP011080249 * page 2580, right-hand column, paragraph 2 - paragraph 3 * * page 2581, left-hand column, paragraph 3 - page 2582, right-hand column, paragraph 1 * * page 2585, left-hand column, paragraph 1 - page 2586, left-hand column, paragraph 1 * | 1-8 | |
| A | LIN DAI ET AL: "Receive antenna selection for mimo systems in correlated channels" COMMUNICATIONS, 2004 IEEE INTERNATIONAL CONFERENCE ON PARIS, FRANCE 20-24 JUNE 2004, PISCATAWAY, NJ, USA,IEEE, 20 June 2004 (2004-06-20), pages 2944-2948, XP010712303 ISBN: 0-7803-8533-0 * page 2580, right-hand column, paragraph 2 - paragraph 3 * * page 2581, left-hand column, paragraph 3 - page 2582, right-hand column, paragraph 1 * * page 2585, left-hand column, paragraph 1 - page 2586, left-hand column, paragraph 1 * | 1-8 | TECHNICAL FIELDS SEARCHED (IPC) |

The present search report has been drawn up for all claims

| Place of search | Date of completion of the search | Examiner |
|---|---|---|
| Munich | 27 March 2006 | Agudo Cortada, E |

EPO FORM 1503 03.82 (P04C01)